# DEMANDE DE BREVET EUROPEEN

(11) **EP 2 196 913 A1**
(43) Date de publication de la demande: **16.06.2010**
(21) Numéro de dépôt: 09013851.2
(22) Date de dépôt: 04.11.2009
(51) Int. Cl.: G06F 12/14

(54) **Procédé de gestion d'un arbre de hachage basé sur l'utilisation d'une mémoire cache, pour protéger l'intégrité de données**

(30) Priorité: 15.12.2008 FR 0807040
(71) Demandeur: STMicroelectronics Rousset SAS, 13790 Rousset (FR)
(72) Inventeur: Su, Lifeng, 13100 Aix en Provence (FR)
(74) Mandataire: Marchand, André

(57) **Abrégé**

L'invention concerne un procédé d'accès à des données stockées de manière sécurisée dans une mémoire non sécurisée (EMEM), grâce à des signatures formant un arbre de contrôle d'intégrité comprenant une signature racine mémorisée dans un espace de stockage sécurisé (HTM), et des signatures de niveaux inférieurs stockées dans la mémoire non sécurisée, le procédé comprenant le calcul d'une signature de premier niveau à partir des données d'un groupe comprenant une donnée modifiée, et de stockage temporaire de la signature calculée dans une mémoire sécurisée (CMEM), le calcul d'une signature pour contrôler l'intégrité d'une signature de niveau inférieur étant effectué à partir de la signature à contrôler et d'une seconde signature appartenant à un même groupe que la signature à contrôler, lue en priorité dans la mémoire sécurisée et dans la mémoire non sécurisée si elle présente des valeurs différentes dans les mémoires sécurisée et non sécurisée.

## Description

La présente invention concerne le stockage sécurisé de données dans un espace de stockage non sécurisé.

Dans ce qui suit, le terme "sécurisé" appliqué à une donnée qualifie une donnée bénéficiant de mesures visant à garantir son intégrité. Appliqué à un organe de traitement ou de stockage de données, ce terme qualifie un organe bénéficiant de mesures visant à garantir l'intégrité des données manipulées ou stockées.

Il existe des systèmes tels que les cartes à microcircuit, comportant un espace de stockage de données sécurisé. Toutefois, cet espace de stockage espace présente généralement une capacité insuffisante pour stocker toutes les données sensibles d'une ou plusieurs applications installées dans le système. Un tel système est donc couramment associé à une mémoire non sécurisée. Pour sécuriser les données dans la mémoire non sécurisée, il a été envisagé d'utiliser un arbre de contrôle d'intégrité tel que l'arbre de Merkle permettant de sécuriser un ensemble de données à l'aide d'une seule signature qui est mémorisée dans un espace de stockage sécurisé.

Un arbre de contrôle d'intégrité comprend des signatures de premier niveau calculées sur des groupes de données de l'ensemble de données, des signatures de niveau supérieur calculées sur des groupes de signatures de niveau inférieur, et une signature racine calculée sur un groupe rassemblant les signatures du niveau le plus élevé. Dans ce qui suit, on entend par "signature", le résultat d'une fonction de hachage appliquée à un ensemble de données. Une fonction de hachage présente les propriétés de produire avec une probabilité très faible une signature identique à partir de deux ensembles de données différents, et de ne pas permettre en un temps raisonnable de trouver un ensemble de données qui donne une signature connue.

La vérification d'une donnée à l'aide d'une signature racine nécessite d'obtenir toutes les données du groupe auquel appartient la donnée à vérifier, de calculer la signature du groupe de données, de comparer la signature obtenue avec la signature mémorisée, et de répéter ces opérations avec tous les groupes auxquels appartiennent les signatures obtenues jusqu'à calculer une dernière signature portant sur le groupe de signatures du niveau le plus élevé, et de comparer la dernière signature obtenue avec la signature racine, l'intégrité de la donnée étant validée si la dernière signature obtenue correspond à la signature racine. En sauvegardant de manière sécurisée seulement la signature racine, il est ainsi possible de contrôler l'intégrité des données et de toutes les autres signatures, sans avoir besoin de mémoriser ces informations dans un espace de stockage sécurisé.

Chaque modification d'une donnée nécessite une vérification préalable de l'intégrité de la donnée et de mettre à jour l'arbre de contrôle d'intégrité. Une telle mise à jour est effectuée en calculant la signature du groupe de données auquel appartient la donnée modifiée, et en calculant la signature de chaque groupe comportant une signature modifiée jusqu'à la signature racine.

Ces traitements de vérification et de mise à jour contribuent à ralentir d'une manière importante les accès à la mémoire externe. Cette dégradation des performances est liée au nombre de niveaux de l'arbre de contrôle d'intégrité et donc à la quantité de données à sécuriser.

Il s'avère par ailleurs que ces traitements de vérification et de mise à jour apparaissent souvent redondants. En effet, lorsqu'une donnée est mise à jour, toutes les signatures de la branche de l'arbre de contrôle d'intégrité situées entre la donnée et la signature racine doivent être recalculées et sauvegardées dans la mémoire. Si la même donnée est à nouveau modifiée, les mêmes signatures doivent être recalculées et sauvegardées.

Il est donc souhaitable de simplifier les traitements de contrôle d'intégrité de données sécurisées à l'aide d'un arbre de contrôle d'intégrité et les traitements de mise à jour de telles données.

Dans un mode de réalisation, il est prévu un procédé d'accès à des données stockées de manière sécurisée dans une mémoire non sécurisée, grâce à des signatures formant un arbre de contrôle d'intégrité comprenant une signature racine mémorisée dans un espace de stockage sécurisé et des signatures de niveaux inférieurs à la signature racine, stockées dans la mémoire non sécurisée, l'intégrité d'une donnée étant contrôlée en calculant les signatures dans l'arbre de contrôle d'intégrité, de la signature d'un groupe de données auquel appartient la donnée à contrôler, jusqu'à la signature racine, et en comparant les signatures calculées avec des signatures correspondantes stockées dans l'espace de stockage. Selon un mode de réalisation, le procédé comprend une étape de calcul d'une signature de premier niveau à partir de données d'un groupe comprenant une donnée modifiée, et de stockage temporaire de la signature calculée dans une mémoire sécurisée, le calcul d'une signature pour contrôler l'intégrité d'une signature de niveau inférieur étant effectué à partir de la signature à contrôler et d'une seconde signature appartenant à un même groupe que la signature à contrôler, la seconde signature étant lue en priorité dans la mémoire sécurisée et dans la mémoire non sécurisée si elle présente des valeurs différentes dans les mémoires sécurisée et non sécurisée.

Selon un mode de réalisation, une donnée est considérée intègre dès qu'une signature calculée lors d'un contrôle d'intégrité de la donnée correspond à une signature lue dans la mémoire sécurisée.

Selon un mode de réalisation, seule une signature de premier niveau est calculée et stockée dans la mémoire sécurisée à la suite de la modification d'une donnée, une signature de niveau supérieur étant mise à jour lorsque le nombre de signatures ayant des valeurs différentes dans la mémoire sécurisée et dans la mémoire non sécurisée dépasse un certain seuil.

Selon un mode de réalisation, une signature est stockée dans la mémoire sécurisée en association avec un indicateur signalant que la signature présente des valeurs différentes dans la mémoire sécurisée et dans la mémoire non sécurisée.

Selon un mode de réalisation, la mémoire sécurisée présente une capacité inférieure à la capacité nécessaire au stockage de toutes les signatures de niveaux inférieurs à la signature racine dans l'arbre de contrôle d'intégrité.

Selon un mode de réalisation, le procédé comprend des étapes d'écriture d'une valeur de signature modifiée dans la mémoire sécurisée en un emplacement non occupé par une signature présentant des valeurs différentes dans la mémoire sécurisée et dans la mémoire non sécurisée, et de sauvegarde dans la mémoire non sécurisée d'une signature présentant des valeurs différentes dans la mémoire sécurisée et dans la mémoire non sécurisée si un seuil de nombre de signatures présentant des valeurs différentes dans la mémoire sécurisée et dans la mémoire non sécurisée est atteint.

Dans un mode de réalisation, il est également prévu un système de traitement de données comprenant une mémoire sécurisée et une mémoire non sécurisée, le système étant configuré pour stocker de manière sécurisée des données dans la mémoire non sécurisée, grâce à des signatures formant un arbre de contrôle d'intégrité comprenant une signature racine mémorisée dans un espace de stockage sécurisé et des signatures de niveaux inférieurs à la signature racine, stockées dans la mémoire non sécurisée, et pour contrôler l'intégrité d'une donnée en calculant les signatures dans l'arbre de contrôle d'intégrité, de la signature d'un groupe de données auquel appartient la donnée à contrôler, jusqu'à la signature racine, et en comparant les signatures calculées avec des signatures correspondantes stockées dans l'espace de stockage. Selon un mode de réalisation, le système est configuré pour calculer une signature de premier niveau à partir de données d'un groupe comprenant une donnée modifiée, et stocker temporairement la signature calculée dans la mémoire sécurisée, et pour calculer une signature pour contrôler l'intégrité d'une signature de niveau inférieur, à partir de la signature à contrôler et d'une seconde signature appartenant à un même groupe que la signature à contrôler, lue en priorité dans la mémoire sécurisée et dans la mémoire non sécurisée si elle présente des valeurs différentes dans les mémoires sécurisée et non sécurisée.

Selon un mode de réalisation, le système est configuré pour considérer une donnée comme intègre dès qu'une signature calculée lors d'un contrôle d'intégrité de la donnée correspond à une signature lue dans la mémoire sécurisée.

Selon un mode de réalisation, le système est configuré pour calculer seulement une signature de premier niveau et la stocker dans la mémoire sécurisée à la suite de la modification d'une donnée, et pour mettre à jour une signature de niveau supérieur lorsque le nombre de signatures ayant des valeurs différentes dans la mémoire sécurisée et dans la mémoire non sécurisée dépasse un certain seuil.

Selon un mode de réalisation, le système est configuré pour stocker une signature dans la mémoire sécurisée en association avec un indicateur signalant que la signature présente des valeurs différentes dans la mémoire sécurisée et dans la mémoire non sécurisée.

Selon un mode de réalisation, la mémoire sécurisée présente une capacité inférieure à la capacité nécessaire au stockage de toutes les signatures de niveaux inférieurs à la signature racine dans l'arbre de contrôle d'intégrité.

Selon un mode de réalisation, le système comprend une unité de traitement, une unité de gestion d'arbre de contrôle d'intégrité connectée à l'unité de traitement, et une unité de contrôle connectée à l'unité de gestion, à la mémoire sécurisée et à la mémoire non sécurisée, l'unité de gestion étant configurée pour exécuter des commandes de lecture et d'écriture d'une donnée sécurisée émises par l'unité de traitement en contrôlant l'intégrité de la donnée à lire ou à écrire à l'aide de l'arbre de contrôle d'intégrité.

Selon un mode de réalisation, l'unité de contrôle est configurée pour exécuter des commandes émises par l'unité de gestion de lecture et de mise à jour d'une signature dans l'arbre de contrôle d'intégrité, de lecture d'une signature dans la mémoire non sécurisée si la signature présente des valeurs différentes dans les mémoires sécurisée et non sécurisée, et de sauvegarde dans la mémoire non sécurisée d'une signature modifiée mémorisée dans la mémoire sécurisée.

Selon un mode de réalisation, l'unité de contrôle est configurée pour contrôler un taux de remplissage de la mémoire sécurisée avec des signatures modifiées non sauvegardées dans la mémoire non sécurisée.

Selon un mode de réalisation, l'unité de gestion, l'unité de contrôle et la mémoire sécurisée sont réalisées dans un coprocesseur connecté entre l'unité de traitement et la mémoire non sécurisée.

Selon un mode de réalisation, la mémoire sécurisée mémorise pour chaque signature une valeur de signature, une adresse de stockage de la signature dans la mémoire non sécurisée et une valeur de compteur TS qui est mise à jour à chaque écriture ou à chaque écriture et lecture de la signature, l'unité de contrôle exploitant la valeur de compteur pour déterminer une signature stockée dans la mémoire sécurisée la plus anciennement écrite ou la plus anciennement lue ou écrite.

Des exemples de réalisation de l'invention seront décrits dans ce qui suit, à titre non limitatif en relation avec les figures jointes parmi lesquelles :
- la figure 1 représente schématiquement un système de traitement de données sécurisé selon un mode de réalisation, connecté à une mémoire externe,
- la figure 2 représente un arbre de contrôle d'intégrité de données,
- la figure 3 représente schématiquement le contenu d'une mémoire cache dans laquelle sont mémorisées temporairement des signatures,
- les figures 4 à 13 sont des organigrammes de séquences de traitement réalisés dans le système représenté sur la figure 1.

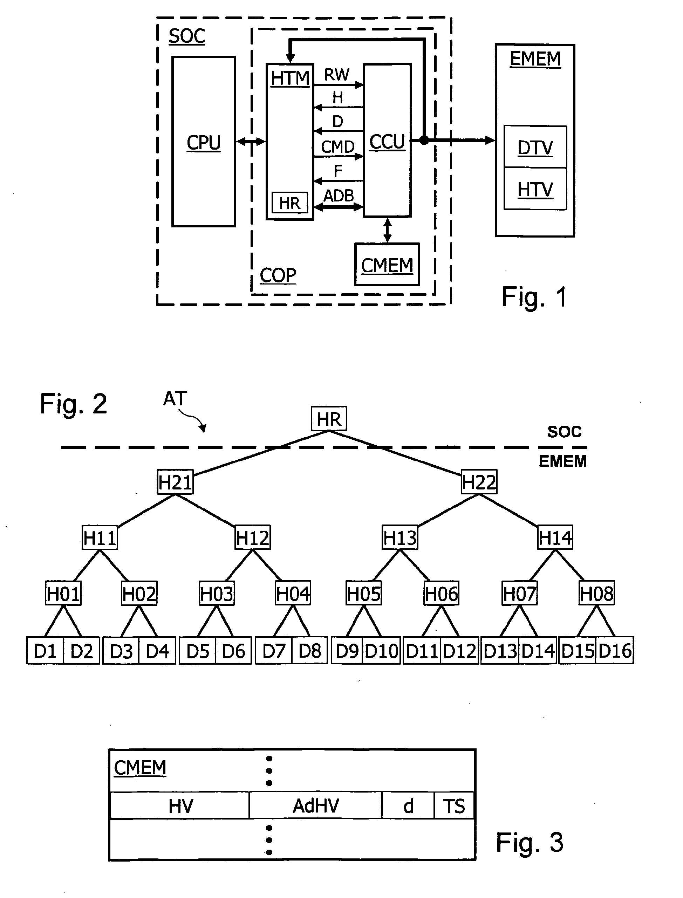

La figure 1 représente un système de traitement de données sécurisé SOC comprenant une unité de traitement CPU et une unité d'interface COP connectée à une mémoire externe EMEM non sécurisée. L'unité d'interface comprend une unité de gestion d'arbre de contrôle d'intégrité HTM, une unité de contrôle CCU de mémoire cache connectée à l'unité HTM et à la mémoire externe EMEM et une mémoire cache CMEM connectée à l'unité CCU. L'unité d'interface COP est par exemple réalisée sous la forme d'un coprocesseur spécialisé.

La mémoire EMEM mémorise des données à sécuriser DTV et des signatures HTV d'un arbre de contrôle d'intégrité. L'unité HTM fournit à l'unité CPU des services d'accès aux données DTV dans la mémoire EMEM. L'unité HTM échange avec l'unité CCU différents signaux de contrôle et de données. Ainsi l'unité HTM fournit à l'unité CCU un signal de sélection de lecture ou d'écriture RW, un signal de commande CMD, et reçoit de l'unité CCU un signal H indiquant si la donnée accédée se trouve ou non dans la mémoire cache CMEM, un signal D indiquant si la donnée accédée, mémorisée dans la mémoire cache est différente de la donnée correspondante dans la mémoire EMEM, et un signal F indiquant si un seuil de taux de remplissage de la mémoire CMEM en données non sauvegardées dans la mémoire EMEM est atteint. Par ailleurs, les unités HTM et CCU sont reliées entre elles par un bus d'adresse et de données ADB pour transmettre des adresses et des données à accéder en mémoire. L'unité CPU peut être connectée à l'unité HTM de la même manière que si l'unité HTM était une mémoire.

La figure 2 représente un exemple simplifié d'arbre de contrôle d'intégrité AT. Dans cet exemple, 16 données D1 à D16 sont sécurisées. Les données D1 à D16 sont rassemblées en 8 groupes de données. L'arbre AT comprend une signature de premier niveau H01 à H08 calculée pour chacun des 8 groupes de données, une signature de second niveau H11 à H14 calculés pour chacun de 4 groupes de signatures du premier niveau H01 à H08, une signature de troisième niveau H21, H22 calculée pour chacun de deux groupes de signatures du second niveau H11 à H14, et une signature racine HR calculée sur un unique groupe rassemblant les signatures du troisième niveau H21, H22. La signature HR est mémorisée de manière sécurisée par exemple par l'unité HTM.

L'arbre de contrôle d'intégrité AT représenté sur la figure 2 est un arbre binaire car chaque groupe de données ou de signatures comprend deux données ou deux signatures de niveau inférieur. Il peut bien entendu être envisagé d'utiliser un arbre de contrôle d'intégrité dans lequel chaque signature est calculée sur un groupe de données ou de signatures comprenant davantage de données ou signatures, par exemple 4. Dans ce dernier cas, l'arbre de contrôle d'intégrité est un arbre quaternaire.

Chaque signature est obtenue à l'aide d'une fonction de hachage portant sur toutes les données ou signatures préalablement concaténées d'un groupe. La fonction de hachage choisie peut être par exemple MD5, SHA-1.

La figure 3 représente la mémoire cache CMEM dans laquelle chaque valeur de signature HV mémorisée est associée à l'adresse de la signature AdHV dans la mémoire EMEM et un indicateur d signalant si la signature mémorisée dans la mémoire CMEM à été modifiée par rapport à celle mémorisée dans la mémoire EMEM. Il est à noter que si l'indicateur d associé à une signature indique que la signature a été modifiée dans la mémoire CMEM sans que la mémoire EMEM ait été mise à jour, cela signifie également que les signatures des niveaux supérieurs de la signature modifiée n'ont pas été mises à jour à la suite de la modification de la signature modifiée.

Selon un mode de réalisation, les unités HTM et CCU sont configurées pour permettre le contrôle d'intégrité d'une donnée D1-D16 le plus rapidement possible. A cet effet, à la fin d'un contrôle d'intégrité réussi d'une donnée, l'intégrité des signatures chargées dans la mémoire cache CMEM a été vérifiée. Comme la mémoire CMEM est sécurisée, il est peu probable qu'une signature dans la mémoire cache puisse être altérée. De cette manière, l'intégrité d'une donnée peut être considérée comme valide, dès qu'une signature appartenant à la branche reliant la donnée à la signature racine est lue dans la mémoire cache et correspond à une signature calculée.

Selon un mode de réalisation, les unités HTM et CCU sont également configurées pour permettre d'écrire une signature modifiée dans la mémoire EMEM le plus tardivement possible. Il en résulte que l'on accepte non seulement que les signatures mémorisées par les mémoires CMEM et EMEM soient incohérentes entre elles, mais aussi que l'arbre de contrôle d'intégrité AT dans la mémoire EMEM soit également incohérent en lui-même.

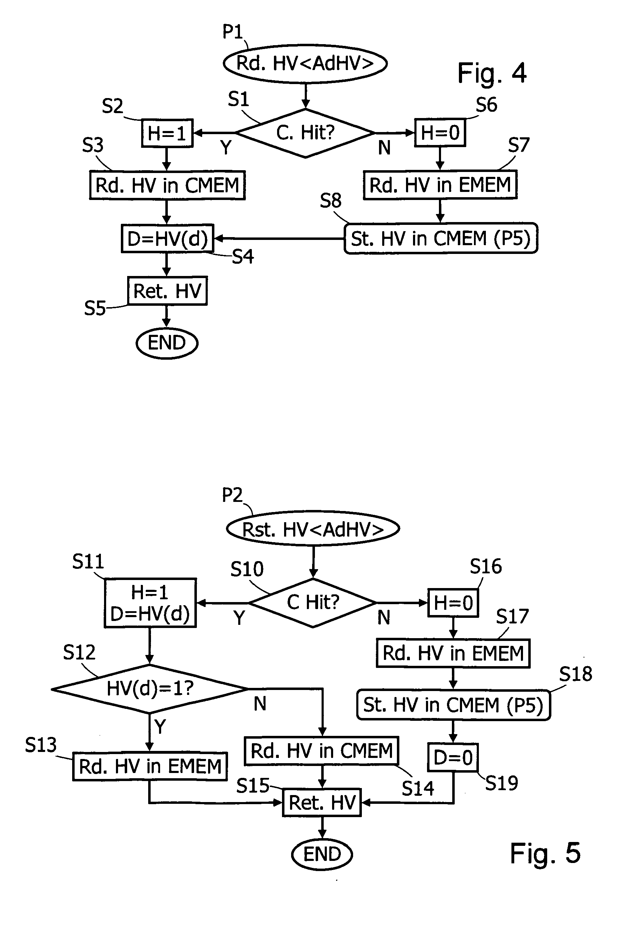

Les figures 4 à 9 représentent des séquences de traitement réalisées par l'unité CCU. La figure 4 représente une séquence de traitement P1 réalisée par l'unité CCU lorsque l'unité HTM commande à l'unité CCU de lire une signature HV. Pour activer la séquence P1, l'unité HTM place le signal RW à l'état lecture, et le signal CMD par exemple à 0, et transmet à l'unité CCU par le bus ADB une adresse de lecture AdHV de la signature à lire HV dans la mémoire EMEM. La séquence P1 comprend des étapes S1 à S5. A l'étape S1, l'unité CCU détermine en fonction de l'adresse reçue AdHV, si la signature à lire HV se trouve dans la mémoire cache. Si la signature HV se trouve dans la mémoire cache, l'unité CCU exécute successivement les étapes S2 à S5, sinon elle exécute successivement les étapes S6 à S8, puis les étapes S4 et S5. A l'étape S2, l'unité CCU active le signal H pour signaler à l'unité HTM que la signature à lire se trouve dans la mémoire cache. A l'étape S3, l'unité CCU lit la signature HV dans la mémoire cache. A l'étape S4, l'unité CCU fixe le signal D à un état correspondant à la valeur de l'indicateur d associé à la signature HV dans la mémoire CMEM. A l'étape S5, l'unité CCU retourne finalement à l'unité HTM la signature lue par le bus ADB. A l'étape S6, l'unité CCU désactive le signal H pour signaler à l'unité HTM que la signature HV ne se trouve pas dans la mémoire cache. A l'étape S7, l'unité CCU commande la lecture de la signature HV à l'adresse AdHV dans la mémoire EMEM. A l'étape S8, l'unité CCU exécute une séquence de traitement P5 mémorisant la signature HV lue dans la mémoire CMEM. L'unité CCU exécute ensuite successivement les étapes S4 et S5.

Dans un mode de réalisation, l'unité CCU offre à l'unité HTM un service permettant d'obtenir la valeur d'une signature dans la mémoire EMEM, lorsque la signature correspondante dans la mémoire CMEM a été modifiée sans être sauvegardée dans la mémoire EMEM. Ainsi, la figure 5 représente une séquence de traitement P2 exécutée par l'unité CCU lorsque l'unité HTM accède à ce service. Pour activer la séquence P2, l'unité HTM place le signal RW à l'état lecture, et le signal CMD par exemple à 1, et transmet à l'unité CCU par le bus ADB une adresse de lecture AdHV de la signature à lire HV dans la mémoire EMEM. La séquence P2 comprend des étapes S10 à S19. A l'étape S10, l'unité CCU détermine en fonction de l'adresse reçue AdHV, si la signature à lire HV se trouve dans la mémoire CMEM. Si la signature à lire HV se trouve dans la mémoire CMEM, l'unité CCU exécute successivement les étapes S11 et S12, sinon successivement les étapes S16 à S19, puis l'étape S15. A l'étape S11, l'unité CCU active le signal H pour signaler à l'unité HTM que la signature à lire se trouve dans la mémoire CMEM, et fixe le signal D à un état correspondant à la valeur de l'indicateur d associé à la signature HV à lire dans la mémoire CMEM. A l'étape S12, l'unité CCU teste l'indicateur d associé à la signature HV à lire. Si l'indicateur d signale que la signature a été modifiée par rapport à la valeur mémorisée dans la mémoire EMEM, l'unité CCU exécute les étapes S13 et S15, sinon les étapes S14 et S15. A l'étape S13, l'unité CCU lit la valeur de la signature HV dans la mémoire EMEM à l'adresse AdHV. A l'étape S14, l'unité CCU lit la valeur de la signature HV dans la mémoire CMEM. A l'étape S15, l'unité CCU retourne finalement la valeur HV de la signature lue par le bus ADB. A l'étape S16, l'unité CCU désactive le signal H pour signaler à l'unité HTM que la signature HV ne se trouve pas dans la mémoire cache. A l'étape S17, l'unité CCU commande la lecture de la signature HV à l'adresse AdHV dans la mémoire EMEM. A l'étape S18, l'unité CCU exécute la séquence de traitement P5 pour mémoriser la signature HV lue dans la mémoire CMEM. A l'étape S19, l'unité CCU désactive le signal D pour signaler à l'unité HTM que la signature lue est identique à celle mémorisée dans la mémoire EMEM. L'unité CCU exécute finalement l'étape S15.

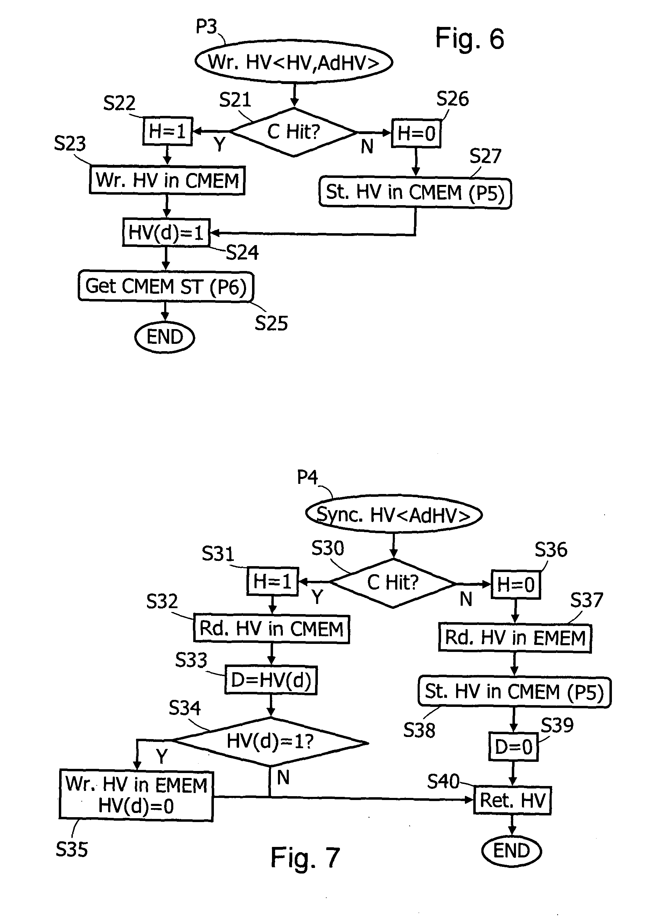

La figure 6 représente une séquence de traitement P3 réalisée par l'unité CCU lorsque l'unité HTM commande à l'unité CCU de modifier une signature HV mémorisée. Pour activer la séquence P3, l'unité HTM place le signal RW à l'état écriture, et le signal CMD par exemple à 2, et transmet à l'unité CCU par le bus ADB une adresse d'écriture AdHV et une valeur de signature HV à mémoriser. La séquence P3 comprend des étapes S21 à S27. A l'étape S21, l'unité CCU détermine en fonction de l'adresse reçue AdHV, si la signature à modifier HV se trouve dans la mémoire CMEM. Si la signature HV se trouve dans la mémoire CMEM, l'unité CCU exécute successivement les étapes S22 à S25, sinon elle exécute successivement les étapes S26, S27, puis les étapes S24 et S25. A l'étape S22, l'unité CCU active le signal H pour signaler à l'unité HTM que la signature à lire se trouve dans la mémoire CMEM. A l'étape S23, l'unité CCU écrit la signature HV dans la mémoire CMEM. A l'étape S24, l'unité CCU met à jour l'indicateur d associé à la signature dans la mémoire cache pour signaler que la signature a été modifiée. A l'étape S25, l'unité CCU exécute finalement une séquence P6 de vérification du taux de remplissage de la mémoire CMEM avec des signatures non sauvegardées dans la mémoire EMEM. A l'étape S26, l'unité CCU désactive le signal H pour signaler à l'unité HTM que la signature HV à modifier ne se trouve pas dans la mémoire cache. A l'étape S27, l'unité CCU exécute la séquence de traitement P5 mémorisant la signature HV à écrire dans la mémoire CMEM. L'unité CCU exécute ensuite finalement les étapes S24 et S25.

La figure 7 représente une séquence de traitement P4 exécutée par l'unité CCU lorsque l'unité HTM commande une lecture avec sauvegarde d'une signature dans la mémoire EMEM. Pour activer la séquence P4, l'unité HTM place le signal RW à l'état lecture et le signal CMD par exemple à 3, et transmet à l'unité CCU par le bus ADB une adresse AdHV de la signature HV à lire et à sauvegarder dans la mémoire EMEM. La séquence P4 comprend des étapes S30 à S40. A l'étape S30, l'unité CCU détermine en fonction de l'adresse reçue AdHV, si la signature à lire HV se trouve dans la mémoire CMEM. Si la signature HV se trouve dans la mémoire CMEM, l'unité CCU exécute successivement les étapes S31 et S34, sinon elle exécute les étapes S36 à S40. A l'étape S31, l'unité CCU active le signal H pour signaler à l'unité HTM que la signature à lire se trouve dans la mémoire CMEM. A l'étape S32, l'unité lit la signature HV dans la mémoire CMEM. A l'étape S33, l'unité CCU fixe le signal D à un état correspondant à la valeur de l'indicateur d associé à la signature HV lue dans la mémoire CMEM. A l'étape S34, l'unité CCU teste l'indicateur d associé à la signature lue dans la mémoire CMEM. Si l'indicateur d signale que la signature HV a été modifiée par rapport à la valeur mémorisée dans la mémoire EMEM, l'unité CCU exécute les étapes S35 et S40, sinon elle exécute uniquement l'étape S40. A l'étape S35, l'unité CCU sauvegarde la valeur de la signature HV dans la mémoire EMEM à l'adresse AdHV, et désactive l'indicateur d associé à la signature pour signaler que la valeur de signature dans la mémoire CMEM est identique à celle mémorisée dans la mémoire EMEM. A l'étape S40, l'unité CCU fournit finalement la signature lue et sauvegardée à l'unité HTM. A l'étape S36, l'unité CCU désactive le signal H pour signaler à l'unité HTM que la signature HV ne se trouve pas dans la mémoire cache. A l'étape S37, l'unité CCU commande la lecture de la signature HV à l'adresse AdHV dans la mémoire EMEM. A l'étape S38, l'unité CCU exécute la séquence de traitement P5 mémorisant la signature HV lue dans la mémoire CMEM. A l'étape S39, l'unité CCU désactive le signal D pour signaler à l'unité HTM que la valeur de signature lue est identique à celle mémorisée dans la mémoire EMEM. L'unité CCU exécute ensuite finalement l'étape S40.

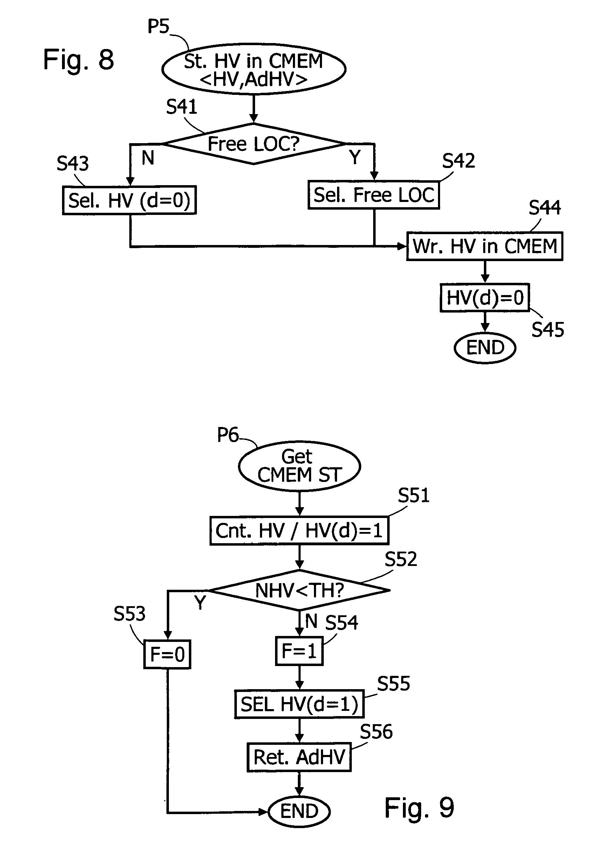

La figure 8 représente la séquence de traitement P5, exécutée par l'unité CCU lors de l'exécution des séquences P1 à P4. A l'activation de la séquence P5, l'unité CCU dispose d'une valeur de signature et de l'adresse de lecture AdHV de la signature HV dans la mémoire EMEM. La séquence P5 comprend des étapes S41 à S45. A l'étape S41, l'unité CCU recherche un emplacement libre dans la mémoire CMEM. Si un emplacement libre est trouvé, l'unité CCU exécute l'étape S42, puis les étapes S44 et S45, sinon l'étape S42, puis les étapes S44 et S45. A l'étape S42, l'unité CCU sélectionne un emplacement libre dans la mémoire CMEM. A l'étape S43, l'unité CCU sélectionne un emplacement de la mémoire CMEM mémorisant une signature associée à un indicateur d signalant que la signature est identique dans les mémoires EMEM et CMEM. De cette manière, l'emplacement d'une signature mémorisée dans la mémoire CMEM et non sauvegardée dans la mémoire EMEM ne risque pas d'être utilisé pour mémoriser une autre signature.

L'unité CCU peut gérer la mémoire cache CMEM par exemple en mode FIFO (First In - First Out), c'est-à-dire qu'elle sélectionne l'emplacement de la donnée écrite dans la mémoire la plus ancienne à l'étape S43.Selon un autre exemple, l'unité CCU peut gérer la mémoire cache en mode LRU (Least recently Used), c'est-à-dire qu'elle sélectionne à l'étape S43 l'emplacement de la donnée qui a été lue ou écrite il y a le plus long temps. A cet effet, il peut être prévu d'associer chaque emplacement de donnée dans la mémoire cache à une valeur de compteur ou un indicateur temporel TS (Figure 3) qui est mis à jour à chaque écriture de donnée en mode FIFO ou à chaque écriture ou lecture en mode LRU. Un tel indicateur temporel peut ne pas être nécessaire par exemple si les signatures sont rangées dans la mémoire cache dans un ordre permettant de déterminer les signatures les plus anciennes à l'aide de l'adresse de chaque signature dans la mémoire cache. Dans l'un ou l'autre des modes FIFO et LRU, la notion d'ancienneté qui est considérée par l'unité CCU peut être relative non pas aux signatures mais aux branches de l'arbre de contrôle d'intégrité AT, si l'unité CCU peut établir une correspondance entre les adresses des signatures dans la mémoire EMEM et les positions des signatures dans l'arbre AT. L'unité CCU peut également utiliser en priorité les emplacements de la mémoire cache occupés par les signatures ayant le plus haut niveau dans l'arbre de contrôle d'intégrité.

A l'étape S44, l'unité CCU écrit la signature HV à l'emplacement sélectionné. A l'étape S45, l'unité CCU met finalement à jour l'indicateur d associé à la signature HV dans la mémoire cache pour signaler que la signature dans la mémoire CMEM a une valeur identique dans la mémoire EMEM.

La figure 9 représente la séquence P6 de vérification de l'état de remplissage de la mémoire CMEM, exécutée par l'unité CCU durant l'exécution de la séquence P3 de mémorisation d'une signature modifiée. La séquence P6 comprend des étapes S51 à S56. A l'étape S51, l'unité CCU détermine le nombre NHV de signatures associées à un indicateur signalant que la signature présente des valeurs différentes dans les mémoires CMEM et EMEM. A l'étape S52, l'unité CCU compare le nombre NHV obtenu à l'étape S51 à une valeur de seuil TH d'occupation de la mémoire CMEM. Si le nombre obtenu NHV est inférieur à la valeur de seuil TH, l'unité CCU exécute l'étape S53, sinon elle exécute successivement les étapes S52 à S56. A l'étape S53, l'unité CCU met à jour le signal F pour signaler à l'unité HTM que la mémoire CCU n'est pas saturée. A l'étape S54, l'unité CCU met à jour le signal F pour signaler à l'unité HTM que la mémoire CCU est saturée. A l'étape S55, l'unité CCU sélectionne dans la mémoire CMEM une signature HV à sauvegarder dans la mémoire EMEM. A cet effet, si l'unité CCU peut établir une correspondance entre les adresses des signatures dans la mémoire EMEM et les positions des signatures dans l'arbre de contrôle d'intégrité AT, elle peut sélectionner par exemple une signature parmi les signatures de plus bas niveau dans l'arbre AT. A l'étape S56, l'unité CCU envoie finalement par le bus ADB à l'unité HTM l'adresse de la signature sélectionnée à l'étape S55.

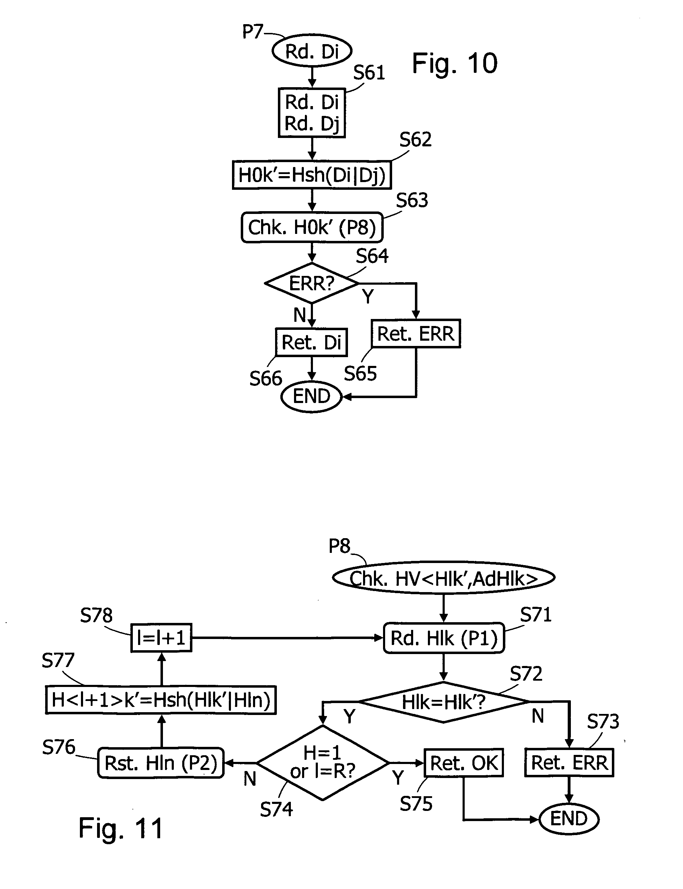

Les figures 10 à 13 représentent des séquences de traitement réalisées par l'unité HTM. La figure 10 représente une séquence de traitement P7 exécutée par l'unité HTM lorsque l'unité CPU demande la lecture d'une donnée sécurisée Di. La séquence P7 comprend des étapes S61 à S66. A l'étape S61, l'unité HTM lit dans la mémoire EMEM la donnée Di à lire et la donnée Dj appartenant au même groupe de données dans l'arbre de contrôle d'intégrité AT. A l'étape S62, l'unité HTM calcule une signature H0k' des données Di et Dj lues et préalablement concaténées. A l'étape S63, l'unité HTM exécute une séquence de traitement P8 de contrôle d'intégrité de la signature H0k' obtenue. A l'étape S64, l'unité HTM teste l'indicateur retourné par la séquence P8. Si l'indicateur retourné par la séquence P8 signale une erreur d'intégrité, l'unité HTM signale l'erreur à l'unité CPU à l'étape S65, sinon l'unité HTM envoie à l'étape S66 la valeur de la donnée lue et validée Di à l'unité CPU.

La figure 11 représente la séquence de traitement P8 de contrôle d'intégrité d'une signature. A l'activation de la séquence P8, l'unité HTM dispose d'une valeur de signature à vérifier Hlk' et de l'adresse de lecture AdHlk de la signature à vérifier dans la mémoire EMEM. La séquence P8 comprend des étapes S71 à S78. A l'étape S71, l'unité HTM commande à l'unité CCU d'exécuter la séquence P1 pour lire la signature Hlk. A l'étape S72, l'unité HTM compare la signature lue Hlk à la signature à vérifier Hlk'. Si ces deux signatures Hlk et Hlk' sont différentes, l'unité HTM retourne un indicateur d'erreur à l'étape S73 et la séquence P8 prend fin. Si les deux signatures Hlk et Hlk' sont identiques, l'unité HTM exécute l'étape S74 où elle teste la valeur du signal H pour déterminer si la dernière signature Hlk lue par CCU était dans la mémoire CMEM et teste la valeur du niveau I pour déterminer si la dernière signature lue Hlk est la signature racine HR. Si la dernière signature lue est la signature racine HR ou se trouve dans la mémoire CMEM, l'unité HTM exécute l'étape S75 fournissant à l'unité CPU un indicateur signalant que l'intégrité de la signature est valide et la séquence de traitement P8 prend fin. Il est en effet considéré que les signatures mémorisées dans la mémoire CMEM qui est sécurisée sont intègres et donc que toute donnée ou signature d'un groupe permettant d'obtenir une signature intègre est intègre même si la signature obtenue n'est pas la signature racine. Si la dernière signature lue Hlk n'est pas la signature racine HR et ne se trouve pas dans la mémoire CMEM, l'unité HTM exécute les étapes S76 à S78. A l'étape S76, l'unité HTM commande à l'unité CCU d'exécuter la séquence P2 pour lire la valeur de la signature Hlp appartenant au même groupe de signatures que la dernière signature lue Hlk, avant qu'elle soit éventuellement modifiée dans la mémoire CMEM. A l'étape S77, l'unité HTM calcule la signature H<I+1>k' du groupe comprenant la signature précédemment lue Hlp et la signature Hlk précédemment vérifiée. A l'étape S78, un indice de niveau I dans l'arbre de contrôle d'intégrité AT est incrémenté de 1. L'unité HTM reprend ensuite l'exécution de la séquence P8 à l'étape S71 pour vérifier la dernière signature Hlk' calculée.

Si par exemple la donnée D3 a été remplacée dans la mémoire EMEM par la donnée D3', la signature H02 portant sur les données D3, D4 du groupe auquel appartient D3 a également été modifiée, la nouvelle valeur H02' de cette signature est mémorisée dans la mémoire cache EMEM et son indicateur d associé est à 1. Si ensuite la donnée D2 doit être lue et donc son intégrité contrôlée, la donnée D1 appartenant au même groupe que la donnée D2 est lue et la signature H01' portant sur les données du groupe D1, D2 est calculée. La signature calculée H01' doit alors être comparée avec la signature mémorisée H01. Si la signature mémorisée correspondante H01 ne se trouve pas dans la mémoire cache, elle est alors lue dans la mémoire EMEM pour effectuer la comparaison avec la signature calculée. Ensuite, l'intégrité de la signature H01 lue doit être vérifiée. A cet effet, il convient de calculer la signature H11' portant sur les signatures du groupe auquel appartient la signature H01. Si on calcule la signature H11' à partir de la signature H01 et de la signature H02', la signature obtenue H11' sera probablement différente de la signature mémorisée H11 si celle-ci n'a pas été mise à jour depuis la modification de la signature H02. La séquence P2 permet d'accéder à la valeur précédente de la signature H02 telle que mémorisée dans la mémoire EMEM. La signature H11' peut donc être calculée à partir de H01 et de l'ancienne valeur de H02 (étape S76 dans la séquence P8) et correspond à la manière dont la signature mémorisée H11 a été calculée.

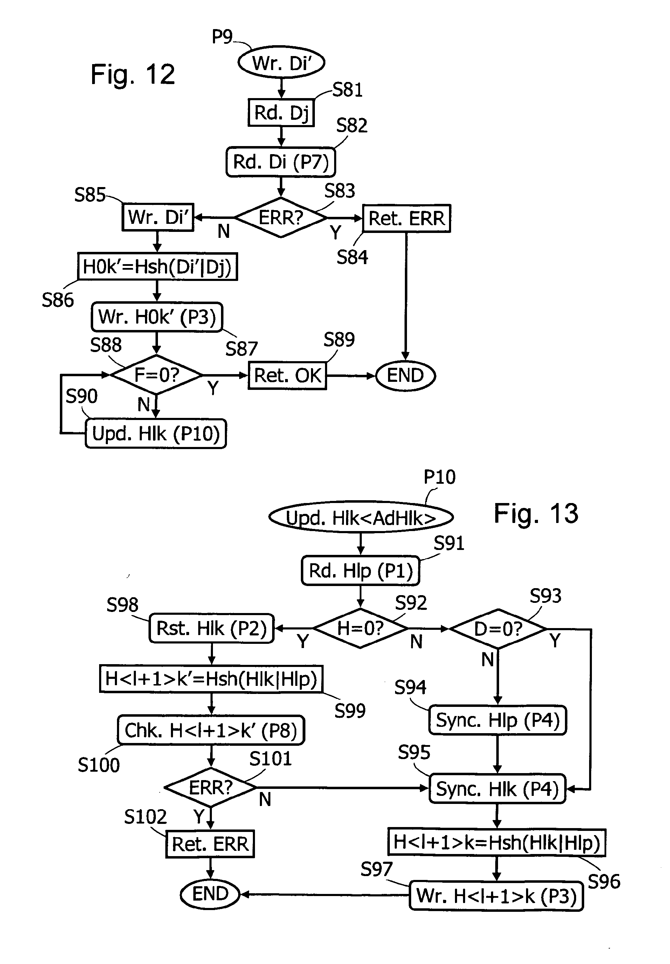

La figure 12 représente une séquence de traitement P9 exécutée par l'unité HTM lorsque l'unité CPU commande l'écriture d'une donnée dans la mémoire EMEM. L'unité P9 comprend des étapes S81 à S90. A l'étape S81, l'unité HTM lit la donnée Dj appartenant au même groupe que la donnée Di' à écrire. A l'étape S82, l'unité HTM exécute la séquence P7 pour lire et vérifier la donnée Di stockée la mémoire EMEM à l'adresse de la donnée à écrire Di'. Il est à noter que la donnée Dj est également vérifiée lors de l'étape S82, puisque Di et Dj appartiennent au même groupe. A l'étape S83, l'unité HTM teste l'indicateur d'erreur retourné par la séquence P7. Si cet indicateur signale une erreur d'intégrité, l'unité HTM exécute l'étape S84 fournissant à l'unité CPU un indicateur d'erreur signalant que la signature n'est pas intègre et la séquence de traitement P9 prend fin. Si l'indicateur ne signale pas une erreur d'intégrité, l'unité HTM exécute les étapes S85 à S90. A l'étape S85, l'unité HTM commande l'écriture dans la mémoire EMEM de la donnée Di'. A l'étape S86, l'unité HTM calcule la signature H0k' portant sur les données Di' et Dj. A l'étape S87, l'unité HTM déclenche l'exécution par l'unité CCU de la séquence de traitement P3 pour mémoriser la signature calculée H0k'. A l'étape S88, l'unité HTM teste le signal F pour déterminer si le seuil d'occupation TH de la mémoire CMEM est toujours atteint. Si le seuil d'occupation de la mémoire CMEM n'est pas atteint (F = 0), l'unité HTM exécute l'étape S89 où elle fournit à l'unité CPU un indicateur signalant que l'écriture de la donnée Di' a été effectuée et la séquence P9 prend fin. Si le seuil d'occupation TH de la mémoire CMEM est atteint (F = 1), l'unité HTM exécute l'étape S90 et reprend l'exécution de la séquence à l'étape S88. A l'étape S90, l'unité HTM appelle une séquence de traitement P10 de sauvegarde dans la mémoire EMEM d'une signature mémorisée seulement dans la mémoire CMEM. Il est à noter que la valeur du seuil TH peut être fixée à la capacité maximum de la mémoire CMEM car l'occupation de la mémoire CMEM est vérifiée à chaque mise à jour de signature. Par conséquent, même si la valeur du seuil TH est fixée à la capacité de la mémoire CMEM, l'unité CCU peut toujours trouver un emplacement à l'étape S43 lors de l'exécution de la séquence P5.

La figure 13 représente la séquence de traitement P10 de sauvegarde d'une signature Hlk. Cette séquence est exécutée par l'unité HTM lorsque le signal F émis par l'unité CCU indique que le seuil TH du nombre NHV de signatures mémorisées dans la mémoire CMEM et non sauvegardées dans la mémoire EMEM est atteint. Lorsque le signal F est activé par l'unité CCU, l'unité HTM reçoit de l'unité CCU l'adresse AdHlk d'une signature à sauvegarder dans la mémoire EMEM. La séquence de traitement P10 comprend des étapes S91 à S102. A l'étape S91, l'unité HTM active la séquence P1 pour commander à l'unité CCU de lire la signature Hlp appartenant au même groupe que la signature Hlk à sauvegarder. A l'étape S92, l'unité HTM teste le signal H indiquant si la signature Hlp lue se trouve dans la mémoire CMEM. Si la signature Hlp se trouve dans la mémoire CMEM, l'unité HTM exécute l'étape S93, sinon elle exécute les étapes S98 à S102. A l'étape S93, l'unité HTM teste le signal D pour déterminer si la signature lue Hlp présente une valeur différente dans les mémoires CMEM et EMEM. Si la signature lue Hlp présente une valeur différente dans les mémoires CMEM et EMEM, l'unité HTM exécute les étapes S94 à S97, sinon elle exécute directement les étapes S95 à S97. A l'étape S94, l'unité HTM active l'exécution de la séquence P4 par l'unité CCU pour sauvegarder la signature Hlp dans la mémoire EMEM. A l'étape S95, l'unité HTM active l'exécution de la séquence P4 par l'unité CCU pour sauvegarder également la signature Hlk dans la mémoire EMEM. A l'étape S96, l'unité HTM calcule la signature H<I+1>k portant sur les signatures Hlk et Hlp. A l'étape S97, l'unité HTM active l'exécution par l'unité CCU de la séquence P3 pour mémoriser la signature calculée H<I+1>k dans la mémoire CMEM, et la séquence P10 prend fin.

A l'étape S98 exécutée lorsque la signature Hlp ne se trouve pas dans la mémoire CMEM, l'unité HTM active l'exécution par l'unité CCU de la séquence P2 pour obtenir la valeur de la signature Hlk dans la mémoire EMEM. A l'étape S99, l'unité HTM calcule la signature H<I+1>k' portant sur les signatures HI1 et HI2 obtenues aux étapes S91 et S98. A l'étape S100, l'unité HTM lance l'exécution de la séquence P8 pour vérifier la signature calculée H<I+1>k'. A l'étape S101, si la signature H<I+1>k' est intègre, l'unité HTM exécute les étapes S95 à S97, sinon, elle exécute l'étape S102 où elle retourne un signal d'erreur vers l'unité CPU.

La séquence P10 permet de sauvegarder deux signatures du même groupe si elles ont toutes deux été modifiées sans être sauvegardées dans la mémoire EMEM. Sinon la séquence P10 sauvegarde une signature modifiée, mais modifie une signature H<I+1>k au niveau immédiatement supérieur. Si la signature modifiée H<I+1>k était déjà à l'état modifié (d=1) avant la sauvegarde de la signature du niveau inférieur Hlk, le nombre de signatures dans la mémoire CMEM non sauvegardées diminue de 1. En revanche, si la signature modifiée H<I+1>k était identique dans les mémoires CMEM et EMEM, le nombre de signatures dans la mémoire CMEM non sauvegardées reste inchangé. Dans ce dernier cas, l'unité CCU peut maintenir actif le signal F, de sorte que l'unité HTM exécute à nouveau la séquence P10.

Il peut également être prévu une séquence de traitement permettant de reconstruire complètement l'arbre de contrôle d'intégrité AT dans la mémoire EMEM à partir des signatures mémorisées dans les mémoires CMEM et EMEM, dans une procédure d'arrêt du système SOC, si la mémoire EMEM est une mémoire non volatile. Cette séquence de reconstruction consiste à appeler la séquence P10 sur chaque signature modifiée dans la mémoire CMEM (associé à un indicateur d à 1) en partant des signatures du premier niveau, jusqu'à obtenir une nouvelle valeur de signature racine HR. De même, notamment si la mémoire EMEM est une mémoire volatile, il peut être prévu une séquence d'initialisation permettant d'initialiser les zones DTV et HTV dans la mémoire EMEM en initialisant la zone DTV et en construisant l'arbre de contrôle d'intégrité AT (calcul de signatures) à partir des valeurs initiales des données.

Il apparaîtra clairement à l'homme de l'art que la présente invention est susceptible de diverses variantes de réalisation et diverses applications. En particulier, l'invention n'est pas limitée à une mise en oeuvre matérielle du procédé par un coprocesseur. En effet, l'invention peut également être mise en oeuvre d'une manière purement logicielle avec un programme exécuté par un microprocesseur connecté à une mémoire sécurisée et une mémoire externe non sécurisée ou par un microcontrôleur comportant une mémoire interne sécurisée et connecté à une mémoire externe sécurisée. Les signaux échangés entre les unités HTM et CCU, précédemment décrits, sont alors des variables de programme.

D'une manière plus générale, l'invention peut s'appliquer à tous les systèmes mettant en oeuvre un arbre de contrôle d'intégrité pour sécuriser des données provenant d'une mémoire distante, considérée comme non sécurisée, et utilisant une mémoire sécurisée par exemple locale. Les données à sécuriser peuvent ainsi être des fichiers ou des messages transmis dans un réseau.

Par ailleurs, d'autres signaux peuvent être échangés entre les unités HTM et CCU que ceux précédemment décrits. Ainsi d'autres combinaison des signaux CMD et RW peuvent être prévues pour déclencher l'exécution par l'unité CCU des séquences de traitement P1 à P4.

D'autres modes de gestion de la mémoire cache CMEM peuvent être prévus. Ainsi, la mémoire cache peut être divisée en ensembles, chaque ensemble pouvant recevoir des signatures ayant une adresse dans la mémoire EMEM dont une partie des bits du mot d'adresse est égale à une certaine valeur attribuée à l'ensemble, chaque signature étant mémorisée dans un ensemble en association avec l'autre partie des bits de son adresse dans la mémoire EMEM. Différents modes de sélection d'une signature (aux étapes S43, S55) dans la mémoire CMEM, tels que LRU, FIFO, LIFO, etc. peuvent ensuite être appliqués à chaque ensemble séparément. Certaines des séquences P1 à P10 décrites précédemment peuvent alors devoir être adaptées. De même, un seuil de nombre de signatures modifiées peut être fixé pour chaque ensemble de la mémoire cache. Le signal F peut ainsi ne pas rester actif si la sauvegarde d'une signature dans la mémoire EMEM entraîne la modification d'une autre signature dans un autre ensemble de la mémoire CMEM.

Egalement, d'autres modes de sélection d'une signature à remplacer (étape S43) dans la mémoire cache CMEM peuvent être prévus, notamment si l'unité CCU connaît l'algorithme de rangement de l'arbre en mémoire. Ainsi, il peut être prévu de combiner un mode de sélection temporel traditionnel (LRU, FIFO, LIFO, ...) avec un mode de sélection spatial basé sur la connaissance de la position des signatures dans l'arbre AT. Il peut également être prévu d'associer des niveaux de priorité à chaque niveau ou chaque branche de l'arbre. L'unité CCU peut alors sélectionner en vue de son remplacement (étape S43) une signature la moins récemment lue ou écrite et appartenant à un niveau ou branche de l'arbre AT dont le niveau de priorité est le plus élevé.

## Revendications

1. Procédé d'accès à des données (D1-D16) stockées de manière sécurisée dans une mémoire non sécurisée (EMEM), grâce à des signatures (H01-H08, H11-H14, H21, H22, HR) formant un arbre de contrôle d'intégrité (AT) comprenant une signature racine (HR) mémorisée dans un espace de stockage sécurisé (HTM) et des signatures de niveaux inférieurs (H01-H08, H11-H14, H21, H22) à la signature racine, stockées dans la mémoire non sécurisée, l'intégrité d'une donnée étant contrôlée en calculant les signatures dans l'arbre de contrôle d'intégrité, de la signature d'un groupe de données auquel appartient la donnée à contrôler, jusqu'à la signature racine, et en comparant les signatures calculées avec des signatures correspondantes stockées dans l'espace de stockage,
**caractérisé en ce qu'**il comprend une étape de calcul d'une signature de premier niveau (H0k') à partir de données (Di, Dj) d'un groupe comprenant une donnée modifiée (Di), et de stockage temporaire de la signature calculée dans une mémoire sécurisée (CMEM), le calcul d'une signature (H<I+1>k) pour contrôler l'intégrité d'une signature de niveau inférieur (Hlk) étant effectué à partir de la signature à contrôler et d'une seconde signature (Hlp) appartenant à un même groupe que la signature à contrôler, la seconde signature étant lue en priorité dans la mémoire sécurisée et dans la mémoire non sécurisée (EMEM) si elle présente des valeurs différentes dans les mémoires sécurisée et non sécurisée.

2. Procédé selon la revendication 1, dans lequel une donnée (Di) est considérée intègre dès qu'une signature calculée (Hlk') lors d'un contrôle d'intégrité de la donnée correspond à une signature (Hlk) lue dans la mémoire sécurisée (CMEM).

3. Procédé selon la revendication 1 ou 2, dans lequel seule une signature de premier niveau (H0k') est calculée et stockée dans la mémoire sécurisée (CMEM) à la suite de la modification d'une donnée (Di), une signature de niveau supérieur (Hlk') étant mise à jour lorsque le nombre de signatures (NHV) ayant des valeurs différentes dans la mémoire sécurisée (CMEM) et dans la mémoire non sécurisée (EMEM) dépasse un certain seuil (TH).

4. Procédé selon l'une des revendications 1 à 3, dans lequel une signature (Hlk) est stockée dans la mémoire sécurisée (CMEM) en association avec un indicateur (d) signalant que la signature présente des valeurs différentes dans la mémoire sécurisée et dans la mémoire non sécurisée (EMEM).

5. Procédé selon l'une des revendications 1 à 4, dans lequel la mémoire sécurisée (CMEM) présente une capacité inférieure à la capacité nécessaire au stockage de toutes les signatures (H01-H08, H11-H14, H21, H22) de niveaux inférieurs à la signature racine (HR) dans l'arbre de contrôle d'intégrité (AT).

6. Procédé selon l'une des revendications 1 à 5, comprenant des étapes d'écriture d'une valeur de signature modifiée dans la mémoire sécurisée (CMEM) en un emplacement non occupé par une signature présentant des valeurs différentes dans la mémoire sécurisée et dans la mémoire non sécurisée (EMEM), et de sauvegarde dans la mémoire non sécurisée d'une signature présentant des valeurs différentes dans la mémoire sécurisée et dans la mémoire non sécurisée si un seuil (TH) de nombre de signatures présentant des valeurs différentes dans la mémoire sécurisée et dans la mémoire non sécurisée est atteint.

7. Système de traitement de données comprenant une mémoire sécurisée (CMEM) et une mémoire non sécurisée (EMEM), le système étant configuré pour stocker de manière sécurisée des données (D1-D16) dans la mémoire non sécurisée (EMEM), grâce à des signatures (H01-H08, H11-H14, H21, H22, HR) formant un arbre de contrôle d'intégrité (AT) comprenant une signature racine (HR) mémorisée dans un espace de stockage sécurisé (HTM) et des signatures de niveaux inférieurs (H01-H08, H11-H14, H21, H22) à la signature racine, stockées dans la mémoire non sécurisée, et pour contrôler l'intégrité d'une donnée en calculant les signatures dans l'arbre de contrôle d'intégrité, de la signature d'un groupe de données auquel appartient la donnée à contrôler, jusqu'à la signature racine, et en comparant les signatures calculées avec des signatures correspondantes stockées dans l'espace de stockage,
**caractérisé en ce qu'**il est configuré pour calculer une signature de premier niveau (H0k') à partir de données (Di, Dj) d'un groupe comprenant une donnée modifiée (Di), et stocker temporairement la signature calculée dans la mémoire sécurisée (CMEM), et pour calculer une signature (H<I+1>k) pour contrôler l'intégrité d'une signature de niveau inférieur (Hlk), à partir de la signature à contrôler et d'une seconde signature (Hlp) appartenant à un même groupe que la signature à contrôler, lue en priorité dans la mémoire sécurisée et dans la mémoire non sécurisée (EMEM) si elle présente des valeurs différentes dans les mémoires sécurisée et non sécurisée.

8. Système selon la revendication 7, configuré pour considérer une donnée (Di) comme intègre dès qu'une signature calculée (Hlk') lors d'un contrôle d'intégrité de la donnée correspond à une signature (Hlk) lue dans la mémoire sécurisée (CMEM).

9. Système selon la revendication 7 ou 8, configuré pour calculer seulement une signature de premier niveau (H0k') et la stocker dans la mémoire sécurisée (CMEM) à la suite de la modification d'une donnée (Di), et pour mettre à jour une signature de niveau supérieur (Hlk') lorsque le nombre de signatures (NHV) ayant des valeurs différentes dans la mémoire sécurisée (CMEM) et dans la mémoire non sécurisée (EMEM) dépasse un certain seuil (TH).

10. Système selon l'une des revendications 7 à 9, configuré pour stocker une signature (Hlk) dans la mémoire sécurisée (CMEM) en association avec un indicateur (d) signalant que la signature présente des valeurs différentes dans la mémoire sécurisée et dans la mémoire non sécurisée (EMEM).

11. Système selon l'une des revendications 7 à 10, dans lequel la mémoire sécurisée (CMEM) présente une capacité inférieure à la capacité nécessaire au stockage de toutes les signatures (H01-H08, H11-H14, H21, H22) de niveaux inférieurs à la signature racine (HR) dans l'arbre de contrôle d'intégrité (AT).

12. Système selon l'une des revendications 7 à 11, comprenant une unité de traitement (CPU), une unité de gestion d'arbre de contrôle d'intégrité (HTM) connectée à l'unité de traitement, et une unité de contrôle (CCU) connectée à l'unité de gestion, à la mémoire sécurisée (CMEM) et à la mémoire non sécurisée (EMEM), l'unité de gestion étant configurée pour exécuter des commandes de lecture et d'écriture d'une donnée sécurisée émises par l'unité de traitement en contrôlant l'intégrité de la donnée à lire ou à écrire à l'aide de l'arbre de contrôle d'intégrité (AT).

13. Système selon la revendication 12, dans lequel l'unité de contrôle (CCU) est configurée pour exécuter des commandes émises par l'unité de gestion (HTM) de lecture et de mise à jour d'une signature (HV) dans l'arbre de contrôle d'intégrité (AT), de lecture d'une signature dans la mémoire non sécurisée (EMEM) si la signature présente des valeurs différentes dans les mémoires sécurisée (CMEM) et non sécurisée, et de sauvegarde dans la mémoire non sécurisée d'une signature modifiée mémorisée dans la mémoire sécurisée.

14. Système selon la revendication 12 ou 13, dans lequel l'unité de contrôle (CCU) est configurée pour contrôler un taux de remplissage de la mémoire sécurisée (CMEM) avec des signatures modifiées (Hlk') non sauvegardées dans la mémoire non sécurisée (EMEM).

15. Système selon l'une des revendications 12 à 14, dans lequel l'unité de gestion (HTM), l'unité de contrôle (CCU) et la mémoire sécurisée (CMEM) sont réalisées dans un coprocesseur (COP) connecté entre l'unité de traitement (CPU) et la mémoire non sécurisée (EMEM).

16. Système selon l'une des revendications 7 à 15, dans lequel la mémoire sécurisée (CMEM) mémorise pour chaque signature (Hlk) une valeur de signature, une adresse de stockage de la signature dans la mémoire non sécurisée (EMEM) et une valeur de compteur TS qui est mise à jour à chaque écriture ou à chaque écriture et lecture de la signature, l'unité de contrôle (CCU) exploitant la valeur de compteur pour déterminer une signature stockée dans la mémoire sécurisée (CMEM) la plus anciennement écrite ou la plus anciennement lue ou écrite.
